# EUROPEAN PATENT SPECIFICATION

(11) **EP 2 143 476 B1**
(45) Date of publication and mention of the grant of the patent: **01.02.2012**
(21) Application number: 08160084.3
(22) Date of filing: 10.07.2008
(51) Int. Cl.: B01D 53/18, B01D 53/78, B01D 53/50

(54) **A disperser arrangement for a spray dryer absorber**
Verteileranordnung für einen Sprühtrockner-Absorbierer
Dispositif de dispersion pour un absorbant séchant par pulvérisation

(43) Date of publication of application: 13.01.2010
(73) Proprietor: Alstom Technology Ltd, 5400 Baden (CH)
(72) Inventor: Rafidi, Nabil, 352 61 Växjö (SE); Johansson, Lars-Erik, 360 23 Älmeboda (SE); Tabikh, Ali, 352 53 Växjö (SE); Tryggeson, Henrik, 352 41 Växjö (SE); Åhman, Stefan, 352 42 Växjö (SE)
(74) Representative: Simonsson, Erik

(56) References cited:
- EP-A- 1 310 289
- WO-A-99/10085
- DE-A1- 19 736 761
- US-A- 4 519 990
- US-A- 5 639 430

## Description

### Field of the Invention

The present invention relates to a spray dryer absorber which is operative for removing gaseous pollutants from a hot process gas and comprises a spray dryer chamber and a plurality of dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber.

The present invention further relates to a method of removing gaseous pollutants from a hot process gas by means of a spray dryer absorber.

### Background of the Invention

In the combustion of a fuel, such as coal, oil, peat, waste, etc., in a combustion plant, such as a power plant, a hot process gas is generated, such a hot process gas, often referred to as a flue gas, containing pollutants, including acid gases, such as sulphur dioxide, SO₂. It is necessary to remove as much as possible of the acid gases from the flue gas before the flue gas may be emitted to the ambient air. A spray dryer absorber may be utilized for removing acid gases, including sulphur dioxide, from a flue gas.

An example of a spray dryer absorber can be found in US 4,755,366. The spray dryer absorber comprises a chamber which is provided with a rotary atomizer having an atomizer wheel. The rotary atomizer is supplied with an aqueous suspension, sometimes referred to as a slurry, which comprises an absorbent, such as limestone. The atomizer wheel spins at a high rpm and atomizes the aqueous suspension, such that very small droplets are formed. The small droplets absorb acid gas components from the flue gas, and then form a solid residue thanks to the drying effect of the spray dryer absorber.

A problem of the spray dryer absorber of US 4,755,366 is that it is difficult to increase the capacity of a single spray dryer absorber with respect to the flue gas flow rate. One reason for this difficulty is that the very high rpm of the atomizer wheel poses mechanical obstacles to up-scaling its size.

US 4,519,990 discloses a spray dryer absorber in which three rotary atomizers are located in the roof of a single spray dryer absorber. It is noted in US 4,519,990 that a problem of locating three rotary atomizers in a single spray dryer absorber is that deposits may form on the walls of the absorber. In an attempt to solve this problem US 4,519,990 proposes to introduce a bypass portion of gas through injection ports located at the periphery of the spray dryer absorber.

The method of US 4,519,990 is, however, rather complicated and may result in a poor cleaning of the by-pass portion of the gas, since the latter is not very well contacted with the atomized suspension.

### Summary of the Invention

An object of the present invention is to provide a spray dryer absorber in which the forming of deposits on the walls of the spray dryer absorber is reduced in an efficient manner.

This object is achieved by means of a spray dryer absorber which is operative for removing gaseous pollutants from a hot process gas and comprises a spray dryer chamber and a plurality of dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber, the spray dryer absorber being characterised in said plurality of dispersers comprising a central disperser, which is located at the centre of the roof of the spray dryer chamber, and at least 3 peripheral dispersers surrounding the central disperser, each of said peripheral dispersers being located at substantially the same distance from the periphery of the spray dryer chamber.

An advantage of this spray dryer absorber is that a plurality of dispersers can be arranged in one and the same spray dryer chamber, without such dispersers affecting each other in a negative way. One reason for this positive effect appears to be that the central disperser stabilizes the gas flow in the spray dryer chamber, such that the gas flow does not alter its flow pattern over time. Furthermore, the rotary movement of the gas caused by the dispersers appears to last for an extended period of time, resulting in improved contact between the absorption liquid droplets and the gas, such improved contact resulting in an improved removal of gaseous pollutants and a shorter drying time of the liquid droplets. Hence, by means of this spray dryer the capacity with respect to the flue gas flow, and with respect to the absorption liquid flow, of one spray dryer absorber can be increased, still maintaining an efficient drying of liquid droplets, an efficient removal of gaseous pollutants, and a limited deposition of solids on the walls of the spray dryer absorber.

According to one embodiment said plurality of dispersers comprises 3 to 7 peripheral dispersers and a single central disperser. Such a number of dispersers has been found to provide a spray dryer absorber which is efficient both with respect to investment cost, and with respect to removal of gaseous pollutants.

A further object of the present invention is to provide a method of removing gaseous pollutants from a gas by means of a spray dryer absorber, in which method the forming of deposits on the walls of the spray dryer absorber is reduced in an efficient manner.

This object is achieved by means of a method of removing gaseous pollutants from a hot process gas by means of a spray dryer absorber comprising a spray dryer chamber and a plurality of dispersers mounted at a roof of the spray dryer chamber, each such disperser being operative for dispersing a portion of the hot process gas around a respective atomizer which is operative for atomizing an absorption liquid, each disperser being provided with a flow directing device, which is operative for providing the respective portion of the hot process gas with a rotary movement around the atomizer, as seen from the top of the spray dryer chamber, the method being characterised in said plurality of dispersers comprising a central disperser, which is located at the centre of the roof of the spray dryer chamber, and at least 3 peripheral dispersers surrounding the central disperser, each of said peripheral dispersers being located at substantially the same distance from the periphery of the spray dryer chamber, said method further comprising causing a portion of the hot process gas to pass through said central disperser, and causing further portions of the hot process gas to pass through each of said peripheral dispersers.

An advantage of this method is that the risk of obtaining unwanted effects, such as the forming of large droplets, reduction of rotary movement, etc. is reduced in the areas where flow fields of dispersers being located adjacent to each other interact. This improves the efficiency of removing gaseous pollutants from the hot process gas and of drying the absorption liquid droplets, and reduces the risk of solid deposits forming on the walls of the spray dryer absorber.

Further objects and features of the present invention will be apparent from the description and the claims.

### Brief description of the drawings

The invention will now be described in more detail with reference to the appended drawings in which:
Fig. 1 is a schematic side view of a power plant.
Fig. 2 is a schematic three-dimensional view of a disperser.
Fig. 3a is a three-dimensional view of a spray dryer absorber in accordance with the prior art.
Fig. 3b is a top view of the spray dryer absorber of Fig. 3a.
Fig. 4a is a three-dimensional view of a further spray dryer absorber in accordance with the prior art.
Fig. 4b is a top view of the spray dryer absorber of Fig. 4a.
Fig. 5a is a three-dimensional view of a spray dryer absorber in accordance with one embodiment of the present invention.
Fig. 5b is a top view of the spray dryer absorber of Fig. 5a.
Fig. 6 is a top view of a spray dryer absorber in accordance with a further embodiment of the present invention.

### Description of preferred embodiments

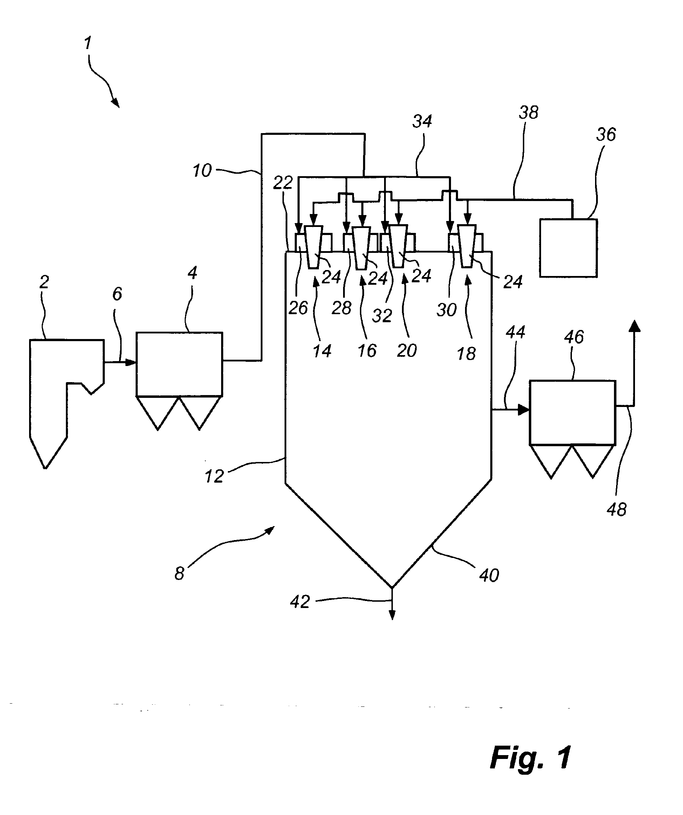

Fig. 1 is a schematic side view and illustrates a power plant 1. The power plant 1 comprises a boiler 2 in which a fuel, such as coal or oil, is combusted. The combustion of the fuel generates a hot process gas in the form of a flue gas. Sulphur species contained in the coal or oil will form sulphur dioxide, which will form part of the flue gas. The flue gas is forwarded from the boiler 2 to an electrostatic precipitator 4 via a duct 6. The electrostatic precipitator 4, an example of which is described in US 4,502,872, serves to remove dust particles from the flue gas.

The flue gas, from which most of the dust particles have been removed, is forwarded to a spray dryer absorber 8 via a duct 10. The spray dryer absorber 8 comprises a spray dryer chamber 12 and four dispersers 14, 16, 18, 20 that are mounted at a roof 22 of the spray dryer chamber 12. Each disperser 14, 16, 18, 20 comprises an atomizer 24. The atomizers 24 could be of the so-called rotary atomizer type, in which a wheel spinning at a high velocity is operative for atomizing an absorption liquid. In this regard, reference may be had, by way of exemplification and not limitation, to, for example, the rotary atomizer described in US 4 ,755,366 . A further alternative is to utilize as the atomizers 24 atomizing nozzles which atomizes an absorption liquid which is supplied thereto under pressure.

Each disperser 14, 16, 18, 20 is provided with a flow directing device 26, 28, 30, 32. A dividing duct 34 is operative for supplying each of the dispersers 14, 16, 18, 20 with a portion of the flue gas, supplied via the duct 10. Each of the flow directing devices 26, 28, 30, 32 is operative for providing the respective portion of the flue gas with a rotary movement around the atomizer 24 of the respective disperser 14, 16, 18, 20.

Of the four dispersers mentioned hereinbefore, the three dispersers 14, 16, 18 are peripheral dispersers which are located at substantially the same distance from the periphery of the spray dryer chamber and which surround the fourth disperser 20, which is a central disperser 20 as will be described in more detail hereinafter.

A tank 36 is operative for supplying each of the atomizers 24 with a flow of an absorption liquid, via a distributing pipe 38, such absorption liquid comprising, for example, a limestone slurry.

The action of the respective dispersers 14, 16, 18, 20 result in the mixing of flue gas with absorption liquid. The result is that the absorption liquid absorbs gaseous pollutants, such as sulphur dioxide, SO₂, from the flue gas. At the same time the absorption liquid is dried by the hot flue gas, resulting in a dry end product being collected at the bottom 40 of the spray dryer chamber 12. The dry product is removed for disposal via a pipe 42. The flue gas, from which most of the gaseous pollutants have been removed, leaves the spray dryer absorber 8 via a duct 44. The flue gas is forwarded, by means of the duct 44, to a second filter, which may, for example, be an electrostatic precipitator 46. As alternative the second filter may be a bag house or any other suitable filtering device. The second filter 46 removes most of the remaining dust particles, and any dried residues of the absorption liquid. A cleaned flue gas may then be admitted to the ambient air via a clean gas duct 48.

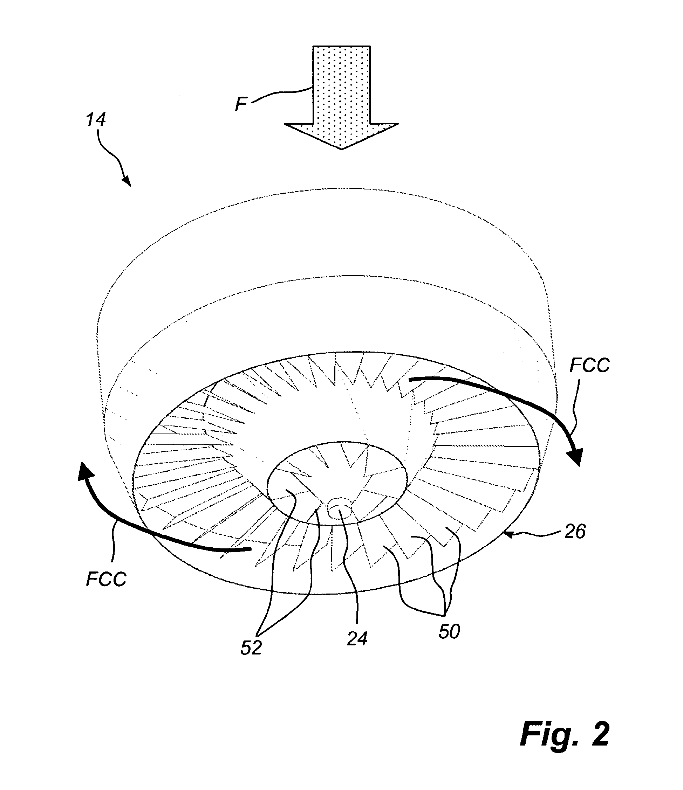

Fig. 2 illustrates the disperser 14 in more detail. The disperser 14 is illustrated as seen from below, at an angle. The flow directing device 26 of the disperser 14 comprises a plurality of outer guide vanes 50, and a plurality of inner guide vanes 52. The portion of the flue gas entering the disperser 14 from the dividing duct 34, illustrated in Fig. 1, has a generally downward direction, as illustrated in Fig. 2 by means of an arrow F. All of the guide vanes 50, 52 have such a direction that they will force the portion of the flue gas F to start rotating around the atomizer 24. Arrows FCC indicate how the guide vanes 50, 52 will deflect the flue gas, such that a flue gas flow rotating, spirally downwards, around the atomizer 24 will be formed. Such a rotating flue gas flow has been found to be very efficient for mixing the flue gas with the absorption liquid atomized by the atomizer 24. The direction of rotation of such flue gas flow FCC will, as seen from the top of the spray dryer chamber 12 illustrated in Fig. 1, be counter-clockwise. The flow directing devices 28, 30, 32 illustrated in Fig. 1 will have a similar design as the flow directing device 26.

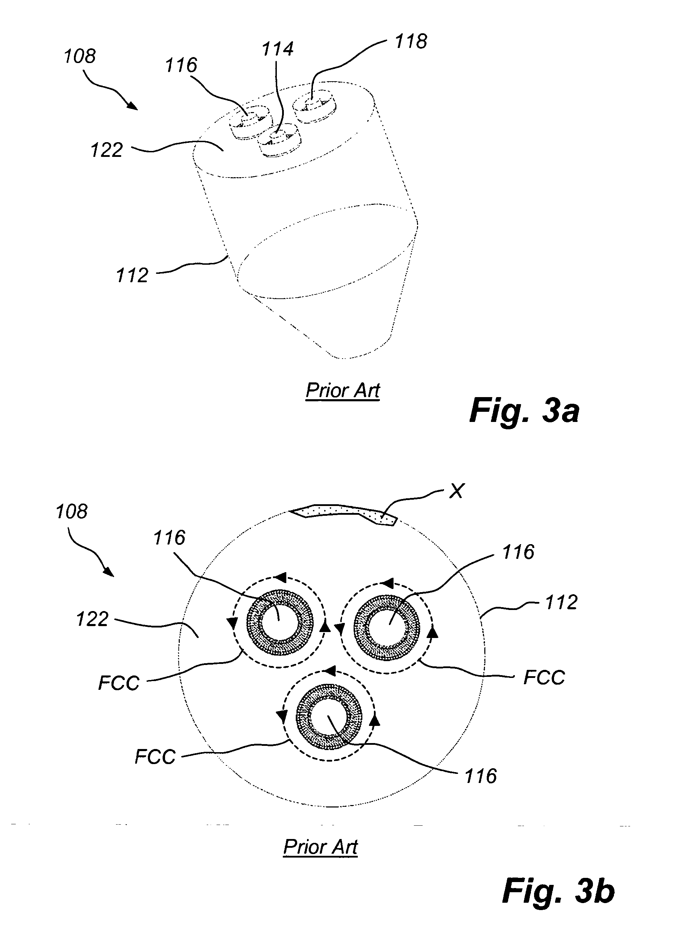

Fig. 3a illustrates a spray dryer absorber 108 in accordance with a prior art design. This spray dryer absorber 108 has a spray dryer chamber 112 and a roof 122. At its roof 122, the spray dryer absorber 108 is provided with three dispersers 114, 116, 118. Each of those dispersers 114, 116, 118 may have a similar design as the disperser 14 described hereinbefore with reference to Fig. 2 and provides a respective portion of flue gas FCC with a rotary movement in a counter-clockwise direction.

Fig. 3b illustrates the spray dryer absorber 108 in accordance with the prior art design as seen from above. It has been found that operation of the prior art spray dryer absorber 108 illustrated in Fig. 3a and Fig. 3b results in severe problems with absorption liquid hitting the wall of the spray dryer chamber 112, e.g., at the position X illustrated in Fig. 3b. The absorption liquid hitting the wall of the spray dryer chamber 112 may result in the formation of large aggregates causing problems to the operation of the spray dryer absorber 108. Furthermore, it has been found that large droplets of absorption liquid are generated during operation of the spray dryer absorber 108. Such large droplets require much time to be dried. Hence, droplets that are not completely dried may end up in the bottom of the spray dryer chamber 112, or in a downstream filter, resulting in operational problems. The use of bypass gas injected at the periphery of the spray dryer chamber 112, in accordance with the teachings of US 4,519,990, may decrease these problems to some extent, but also increases the cost of the spray dryer absorber.

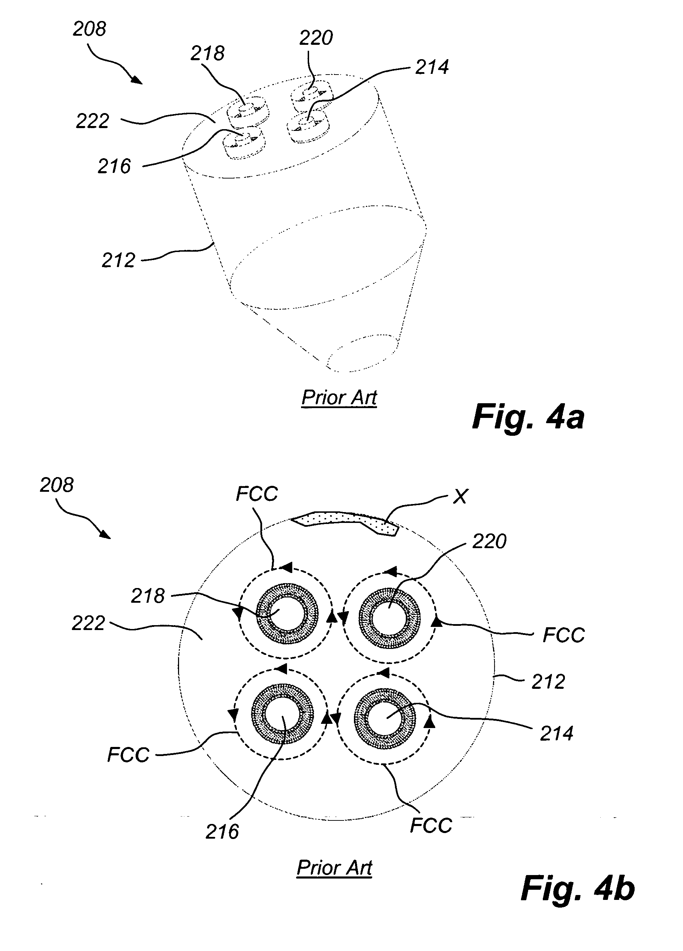

Fig. 4a illustrates a spray dryer absorber 208 in accordance with a further prior art design. This spray dryer absorber 208 has a spray dryer chamber 212 and a roof 222. At its roof 222, the spray dryer absorber 208 is provided with four dispersers 214, 216, 218, 220. Each of those dispersers 214, 216, 218, 220 may have a similar design as the disperser 14 described hereinbefore with reference to Fig. 2, and provides a respective portion of flue gas FCC with a rotary movement in a counter-clockwise direction.

Fig. 4b illustrates the spray dryer absorber 208 in accordance with the prior art design as seen from above. It has been found that operation of the prior art spray dryer absorber 208 illustrated in Fig. 4a and Fig. 4b results in severe problems with absorption liquid hitting the wall of the spray dryer chamber 212, e.g., at the position X illustrated in Fig. 4b. In a similar manner as described hereinbefore with reference to Figs. 3a and 3b the absorption liquid hitting the wall of the spray dryer chamber 212 may cause operational problems to the spray dryer absorber 208. The use of bypass gas injected at the periphery of the spray dryer chamber 212, in accordance with the teachings of US 4,519,990, appears to have a limited effect in reducing such operational problems, and would cause a significant increase in the cost of the spray dryer absorber 208.

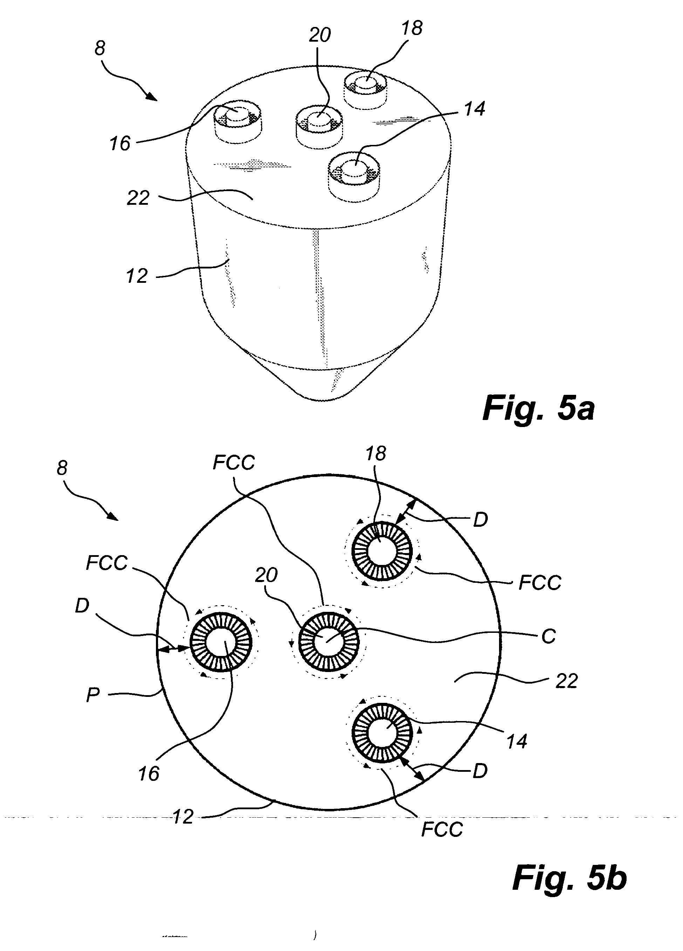

Fig. 5a illustrates the spray dryer absorber 8 in accordance with one embodiment of the present invention, as previously illustrated with reference to Fig. 1 and Fig. 2. In Fig. 5a it is clearly illustrated how the spray dryer chamber 12 is provided, at its roof 22, with the four dispersers 14, 16, 18, 20, of which the three peripheral dispersers 14, 16, 18 surround the central disperser 20.

Fig. 5b illustrates the spray dryer absorber 8 as seen from above. Each of the peripheral dispersers 14, 16, 18 is located at substantially the same distance D from the periphery P of the spray dryer chamber 12. The flow directing device, denoted 26, 28, 30 in Fig. 1 and illustrated in detail in Fig. 2, of each of the peripheral dispersers 14, 16, 18 is operative for providing the portion of the flue gas passing through each of those dispersers 14, 16, 18 with a rotary movement in a counter-clockwise direction FCC as seen from above. Furthermore, the central disperser 20 is located at the centre C of the roof 22 of the spray dryer chamber 12. The central disperser 20 is of a similar design as the peripheral dispersers 14, 16, 18 and has a flow directing device 32 illustrated in Fig. 1 and being of a similar design as the flow directing device 26 illustrated in Fig. 2. Hence, the central disperser 20 provides the portion of the flue gas supplied thereto with a counter-clockwise rotary movement FCC, as seen from above.

It appears as if the central disperser 20 stabilizes the flow from all of the dispersers 14, 16, 18, 20 and provides a situation where the number of collisions between liquid droplets originating from any two adjacent dispersers 14, 16, 18, 20 is much reduced. It would also appear as if a global rotation of gas inside the spray dryer chamber 12 is reduced. The result is a decrease in the formation of large droplets compared to that of the prior art illustrated in Figs. 3a and 3b and Figs. 4a and 4b. Furthermore, in the spray dryer absorber 8 illustrated in Figs. 5a and 5b the rotary movement of the flue gas caused by the dispersers 14, 16, 18, 20 appears to last for an extended period of time, resulting in improved contact between the absorption liquid droplets and the flue gas, such improved contact resulting in an improved removal of gaseous pollutants and a shorter drying time of the liquid droplets. The risk of formation of large aggregates or deposits on the wall of the spray dryer chamber 12 also appears to be reduced compared to the prior art design.

Hence, the design illustrated in Figs. 5a and 5b provides for improved removal of gaseous pollutants and a lower risk of forming aggregates on the wall of the spray dryer chamber 12 without requiring any expensive by-pass devices of the type illustrated in US 4,519,990, but by means of arranging the dispersers in a completely different manner, compared to the prior art.

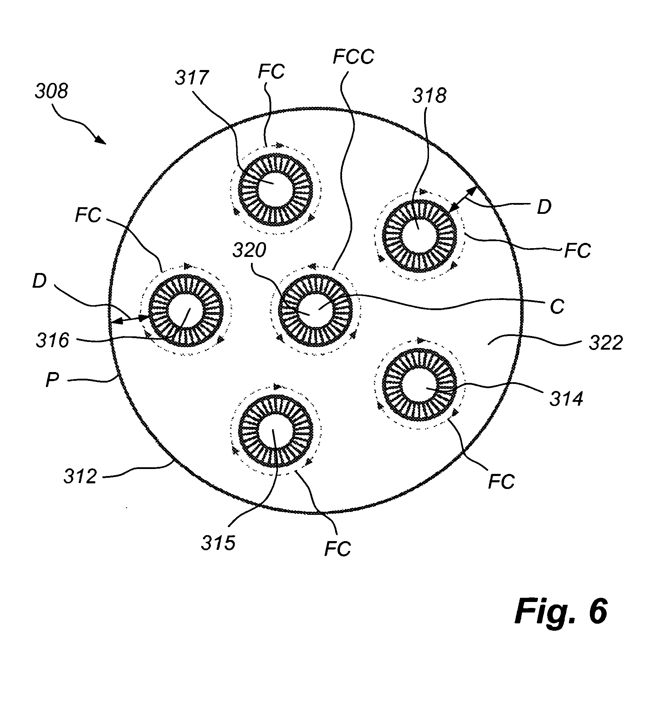

Fig. 6 illustrates a spray dryer absorber 308 in accordance with a further embodiment of the present invention, as seen from the top. The spray dryer absorber 308 is different from the spray dryer absorber 8 described hereinbefore in that the spray dryer absorber 308 is provided with, at its roof 322, with six dispersers 314, 315, 316, 317, 318, 320, of which five dispersers are peripheral dispersers 314, 315, 316, 317, 318 that surround a central disperser 320, which is located at the centre C of the roof 322 of the spray dryer chamber 312. Each of the peripheral dispersers 314, 315, 316, 317, 318 is located at substantially the same distance D from the periphery P of the spray dryer chamber 312.

Furthermore, the central disperser 320 is of the same type as the disperser 14 illustrated hereinbefore with reference to Fig. 2 and is operative for providing the portion of the gas supplied thereto with a rotary movement in a counter-clockwise direction FCC. The peripheral dispersers 314, 315, 316, 317, 318 have, however, a different design. The difference is that the guide vanes will have the opposite direction compared to the guide vanes 50, 52 of the flow directing device 26 of the disperser 14 illustrated in Fig. 2. The peripheral dispersers 314, 315, 316, 317, 318 will, therefore, have a similar function as the disperser 14, but will force the gas to rotate in a clockwise direction, illustrated with arrows FC in Fig. 6. Hence, the central disperser 320 will provide the gas supplied thereto with a rotary movement in the direction FCC, i.e., counter-clockwise direction, which is opposite to the direction FC, i.e., clockwise direction, of the rotary movement of the gas supplied to the peripheral dispersers 314, 315, 316, 317, 318. The fact that the gas supplied to the central disperser 320 rotates in the opposite direction compared to the gas supplied to the peripheral dispersers 314, 315, 316, 317, 318 may in some cases add benefits in further stabilizing the flow from all of the dispersers 314, 315, 316, 317, 318, 320.

It will be appreciated that numerous modifications of the embodiments described above are possible within the scope of the appended claims.

Above it has been described that the spray dryer absorber 8, 308 is provided with 4 dispersers 14, 16, 18, 20, or with 6 dispersers 314, 315, 316, 317, 318, 320. It will be appreciated that the same effect could be achieved with any number of dispersers, as long as one disperser is a central disperser which is located in the centre of the roof of the spray dryer chamber, and the other dispersers are peripheral dispersers surrounding the central disperser. Preferably, a spray dryer absorber is provided with totally 4, 5, 6, 7 or 8 dispersers. Hence, a preferred spray dryer absorber would have 3-7 peripheral dispersers and one central disperser.

Above it has been indicated that the spray dryer absorber 8, having one central disperser 20 and three peripheral dispersers 14, 16, 18, i.e., totally four dispersers, is an improvement with regard to the gas cleaning efficiency, the unwanted formation of solid deposits etc. compared to the prior art spray dryer 208 illustrated with reference to Figs. 4a and 4b and also having four dispersers. However, the spray dryer absorber 8 may also be an improvement in relation to the prior art spray dryer absorber 108 illustrated hereinbefore with reference to Figs. 3a and 3b. Hence, replacing the three dispersers of the prior art spray dryer absorber 108 with the four dispersers of the spray dryer absorber 8 would leed to less problems and improved gas cleaning efficiency, and still a reduced cost, since no by-pass of gas through injection ducts in accordance with US 4,519,990 is needed.

Fig. 2 illustrates one type of disperser 14 that can be utilized in the present invention. It will be appreciated that other types of dispersers could be utilized as well, including dispersers that have other types of flow directing devices, other types of atomizers etc. The flow directing device provides the gas with a rotation, as illustrated, for example, with arrows FCC in Fig. 2.

The use of the terms first, second, etc. do not denote any order or importance, but rather the terms first, second, etc. are used to distinguish one element from another.

## Claims

1. A spray dryer absorber (8; 308) which is operative for removing gaseous pollutants from a hot process gas and comprises a spray dryer chamber (12; 312) and a plurality of dispersers (14, 16, 18, 20; 314, 315, 316, 317, 318, 320) mounted at a roof (22; 322) of the spray dryer chamber (12; 312), each such disperser (14, 16, 18, 20; 314, 315, 316, 317, 318, 320) being operative for dispersing a portion of the hot process gas around a respective atomizer (24) which is operative for atomizing an absorption liquid, each disperser (14, 16, 18, 20; 314, 315, 316, 317, 318, 320) being provided with a flow directing device (26, 28, 30, 32), which is operative for providing the respective portion of the hot process gas with a rotary movement around the atomizer (24), as seen from the top of the spray dryer chamber (12; 312), **characterised in**
said plurality of dispersers (14, 16, 18, 20; 314, 315, 316, 317, 318, 320) comprising a central disperser (20; 320), which is located at the centre (C) of the roof (22; 322) of the spray dryer chamber (12; 312), and at least 3 peripheral dispersers (14, 16, 18; 314, 315, 316, 317, 318) surrounding the central disperser (20; 320), each of said peripheral dispersers (14, 16, 18; 314, 315, 316, 317, 318) being located at substantially the same distance (D) from the periphery (P) of the spray dryer chamber (12; 312).

2. A spray dryer absorber according to claim 1, said plurality of dispersers (14, 16, 18, 20; 314, 315, 316, 317, 318, 320) comprising 3 to 7 peripheral dispersers (14, 16, 18; 314, 315, 316, 317, 318) and a single central disperser (20; 320).

3. A spray dryer absorber (308) according to any one of claims 1-2, the flow directing device of the central disperser (320) being operative for providing said portion of the hot process gas passing through the central disperser (320) with a rotary movement in a direction (FCC), which is opposite to the direction (FC) of the rotary movement of the respective portions of the hot process gas dispersed by each of the peripheral dispersers (314, 315, 316, 317, 318).

4. A method of removing gaseous pollutants from a hot process gas by means of a spray dryer absorber (8; 308) comprising a spray dryer chamber (12; 312) and a plurality of dispersers (14, 16, 18, 20; 314, 315, 316, 317, 318, 320) mounted at a roof (22; 322) of the spray dryer chamber (12; 312), each such disperser (14, 16, 18, 20; 314, 315, 316, 317, 318, 320) being operative for dispersing a portion of the hot process gas around a respective atomizer (24) which is operative for atomizing an absorption liquid, each disperser (14, 16, 18, 20; 314, 315, 316, 317, 318, 320) being provided with a flow directing device (26, 28, 30, 32), which is operative for providing the respective portion of the hot process gas with a rotary movement around the atomizer (24), as seen from the top of the spray dryer chamber (12; 312), **characterised in** said plurality of dispersers (14, 16, 18, 20; 314, 315, 316, 317, 318, 320) comprising a central disperser (20; 320), which is located at the centre (C) of the roof (22; 322) of the spray dryer chamber (12; 312), and at least 3 peripheral dispersers (14, 16, 18; 314, 315, 316, 317, 318) surrounding the central disperser (20; 320), each of said peripheral dispersers (14, 16, 18; 314, 315, 316, 317, 318) being located at substantially the same distance (D) from the periphery (P) of the spray dryer chamber (12; 312), said method further comprising causing a portion of the hot process gas to pass through said central disperser (20; 320), and causing further portions of the hot process gas to pass through each of said peripheral dispersers (14, 16, 18; 314, 315, 316, 317, 318).

5. A method according to claim 4, said plurality of dispersers (14, 16, 18, 20; 314, 315, 316, 317, 318, 320) comprising 3 to 7 peripheral dispersers (14, 16, 18; 314, 315, 316, 317, 318), and a single central disperser (20; 320).

6. A method according to any one of claims 4-5, further comprising causing the portion of the hot process gas passing through said central disperser (320) to obtain a rotary movement in a direction (FCC), which is opposite to the direction (FC) of the rotary movement of each of the respective portions of the hot process gas dispersed by each of said peripheral dispersers (314, 315, 316, 317, 318).

## Patentansprüche

1. Sprühtrockner-Absorbierer (8; 308), welcher so betrieben werden kann, dass gasförmige Verunreinigungen aus einem heißen Prozessgas entfernt werden, und welcher eine Sprühtrocknerkammer (12; 312) und mehrere Verteiler (14, 16, 18, 20; 314, 315, 316, 317, 318, 320) umfasst, die an einem Dach (22; 322) der Sprühtrocknerkammer (12; 312) angebracht sind, wobei jeder dieser Verteiler (14, 16, 18, 20; 314, 315, 316, 317, 318, 320) so betrieben werden kann, dass er einen Teil des heißen Prozessgases um einen entsprechenden Zerstäuber (24) herum verteilt, welcher so betrieben werden kann, dass er eine Absorptionsflüssigkeit zerstäubt, wobei jeder Verteiler (14, 16, 18, 20; 314, 315, 316, 317, 318, 320) mit einer strömungsleitenden Vorrichtung (26, 28, 30, 32) versehen ist, welche so betrieben werden kann, dass sie für eine Drehbewegung des entsprechenden Teils des heißen Prozessgases um den Zerstäuber (24) herum sorgt, betrachtet vom oberen Bereich der Sprühtrocknerkammer (12; 312),
**dadurch gekennzeichnet, dass**
die mehreren Verteiler (14, 16, 18, 20; 314, 315, 316, 317, 318, 320) einen mittleren Verteiler (20; 320), der sich in der Mitte (C) des Daches (22; 322) der Sprühtrocknerkammer (12; 312) befindet, und mindestens 3 äußere Verteiler (14, 16, 18; 314, 315, 316, 317, 318) umfassen, die den mittleren Verteiler (20; 320) umgeben, wobei jeder der äußeren Verteiler (14, 16, 18; 314, 315, 316, 317, 318) im Wesentlichen im selben Abstand (D) vom Rand (P) der Sprühtrocknerkammer (12; 312) angeordnet ist.

2. Sprühtrockner-Absorbierer nach Anspruch 1, wobei die mehreren Verteiler (14, 16, 18, 20; 314, 315, 316, 317, 318, 320) 3 bis 7 äußere Verteiler (14, 16, 18; 314, 315, 316, 317, 318) und einen einzelnen mittleren Verteiler (20; 320) umfassen.

3. Sprühtrockner-Absorbierer (308) nach einem der Ansprüche 1 bis 2, wobei die strömungsleitende Vorrichtung des mittleren Verteilers (320) so betrieben werden kann, dass sie für eine Drehbewegung des Teils des heißen Prozessgases, der durch den mittleren Verteiler (320) gelangt, in eine Richtung (FCC) sorgt, die der Richtung (FC) der Drehbewegung der entsprechenden Teile des heißen Prozessgases entgegengesetzt ist, die von jedem der äußeren Verteiler (314, 315, 316, 317, 318) verteilt werden.

4. Verfahren zum Entfernen gasförmiger Verunreinigungen aus einem heißen Prozessgas mittels eines Sprühtrockner-Absorbierers (8; 308), der eine Sprühtrocknerkammer (12; 312) und mehrere Verteiler (14, 16, 18, 20; 314, 315, 316, 317, 318, 320) umfasst, die an einem Dach (22; 322) der Sprühtrocknerkammer (12; 312) angebracht sind, wobei jeder dieser Verteiler (14, 16, 18, 20; 314, 315, 316, 317, 318, 320) so betrieben werden kann, dass er einen Teil des heißen Prozessgases um einen entsprechenden Zerstäuber (24) herum verteilt, welcher so betrieben werden kann, dass er eine Absorptionsflüssigkeit zerstäubt, wobei jeder Verteiler (14, 16, 18, 20; 314, 315, 316, 317, 318, 320) mit einer strömungsleitenden Vorrichtung (26, 28, 30, 32) versehen ist, welche so betrieben werden kann, dass sie für eine Drehbewegung des entsprechenden Teils des heißen Prozessgases um den Zerstäuber (24) herum sorgt, betrachtet vom oberen Bereich der Sprühtrocknerkammer (12; 312), **dadurch gekennzeichnet, dass** die mehreren Verteiler (14, 16, 18, 20; 314, 315, 316, 317, 318, 320) einen mittleren Verteiler (20; 320), der sich in der Mitte (C) des Daches (22; 322) der Sprühtrocknerkammer (12; 312) befindet, und mindestens 3 äußere Verteiler (14, 16, 18; 314, 315, 316, 317, 318) umfassen, die den mittleren Verteiler (20; 320) umgeben, wobei jeder der äußeren Verteiler (14, 16, 18; 314, 315, 316, 317, 318) im Wesentlichen im selben Abstand (D) vom Rand (P) der Sprühtrocknerkammer (12; 312) angeordnet ist, wobei das Verfahren ferner das Bewirken, dass ein Teil des heißen Prozessgases durch den mittleren Verteiler (20; 320) hindurch gelangt, und das Bewirken umfasst, dass weitere Teile des heißen Prozessgases durch jeden der äußeren Verteiler (14, 16, 18; 314, 315, 316, 317, 318) hindurch gelangen.

5. Verfahren nach Anspruch 4, wobei die mehreren Verteiler (14, 16, 18, 20; 314, 315, 316, 317, 318, 320) 3 bis 7 äußere Verteiler (14, 16, 18; 314, 315, 316, 317, 318) und einen einzelnen mittleren Verteiler (20; 320) umfassen.

6. Verfahren nach einem der Ansprüche 4 bis 5, welches ferner das Bewirken umfasst, dass der Teil des heißen Prozessgases, der durch den mittleren Verteiler (320) gelangt, eine Drehbewegung in eine Richtung (FCC) erhält, die der Richtung (FC) der Drehbewegung jedes der entsprechenden Teile des heißen Prozessgases entgegengesetzt ist, die von jedem der äußeren Verteiler (314, 315, 316, 317, 318) verteilt werden.

## Revendications

1. Absorbeur (8; 308) pour séchoir par pulvérisation, qui permet d'enlever des polluants gazeux présents dans un gaz chaud de traitement et qui comprend
une chambre (12; 312) de séchoir par pulvérisation et plusieurs disperseurs (14, 16, 18, 20; 314, 315, 316, 317, 318, 320) montés sur un toit (22; 322) de la chambre (12; 312) du séchoir par pulvérisation,
chacun de ces disperseurs (14, 16, 18, 20; 314, 315, 316, 317, 318, 320) étant capable de disperser une partie du gaz chaud de traitement autour d'un atomiseur respectif (24) qui permet d'atomiser un liquide d'absorption,
chaque disperseur (14, 16, 18, 20; 314, 315, 316, 317, 318, 320) étant doté d'un dispositif (26, 28, 30, 32) de guidage d'écoulement qui permet de délivrer la partie respective de gaz chaud de traitement avec un déplacement rotatif autour de l'atomiseur (24) dans une vue depuis le sommet de la chambre (12; 312) du séchoir par pulvérisation,
**caractérisé en ce que** :
lesdits disperseurs (14, 16, 18, 20; 314, 315, 316, 317, 318, 320) comprennent un disperseur central (20; 320) situé au centre (C) du toit (22; 322) de la chambre (12; 312) du séchoir par pulvérisation et au moins 3 disperseurs périphériques (14, 16, 18; 314, 315, 316, 317, 318) entourant le disperseur central (20; 320) et
**en ce que** chacun desdits disperseurs périphériques (14, 16, 18; 314, 315, 316, 317, 318) est situé essentiellement à la même distance (D) du périmètre (P) de la chambre (12; 312) du séchoir par pulvérisation.

2. Absorbeur de séchoir par pulvérisation selon la revendication 1, dans lequel lesdits disperseurs (14, 16, 18, 20; 314, 315, 316, 317, 318, 320) comprenant de 3 à 7 disperseurs périphériques (14, 16, 18; 314, 315, 316, 317, 318) et un unique disperseur central (20; 320) .

3. Absorbeur (308) de séchoir par pulvérisation selon l'une quelconque des revendications 1 à 2, dans lequel le dispositif dirigeant l'écoulement du disperseur central (320) permet de délivrer ladite partie du gaz chaud de traitement qui traverse le disperseur central (320) avec un déplacement rotatif dans une direction (FCC) opposée à la direction (FC) du déplacement rotatif des parties respectives du gaz chaud de traitement dispersé par chacun des disperseurs périphériques (314, 315, 316, 317, 318).

4. Procédé permettant d'enlever des polluants gazeux présents dans un gaz chaud de traitement au moyen d'un absorbeur (8; 308) de séchoir par pulvérisation qui comprend une chambre (12; 312) de séchoir par pulvérisation et plusieurs disperseurs (14, 16, 18, 20; 314, 315, 316, 317, 318, 320) montés sur un toit (22; 322) de la chambre (12; 312) du séchoir par pulvérisation,
chacun de ces disperseurs (14, 16, 18, 20; 314, 315, 316, 317, 318, 320) permettant de disperser une partie du gaz chaud de traitement autour d'un atomiseur respectif (24) qui permet d'atomiser un liquide d'absorption,
chaque disperseur (14, 16, 18, 20; 314, 315, 316, 317, 318, 320) étant doté d'un dispositif (26, 28, 30, 32) qui dirige l'écoulement, qui permet de délivrer la partie respective du gaz chaud de traitement avec un déplacement rotatif autour de l'atomiseur (24) dans une vue depuis le sommet de la chambre (12; 312) de séchoir par pulvérisation,
**caractérisé en ce que**
lesdits disperseurs (14, 16, 18, 20; 314, 315, 316, 317, 318, 320) comprennent un disperseur central (20; 320) situé au centre (C) du toit (22; 322) de la chambre (12; 312) du séchoir par pulvérisation et au moins 3 disperseurs périphériques (14, 16, 18; 314, 315, 316, 317, 318) qui entourent le disperseur central (20; 320),
**en ce que** chacun desdits disperseurs périphériques (14, 16, 18; 314, 315, 316, 317, 318) est situé essentiellement à la même distance (D) du périmètre (P) de la chambre (12; 312) du séchoir par pulvérisation et
**en ce que** ledit procédé comprend de plus l'étape qui consiste à faire passer une partie du gaz chaud de traitement par ledit disperseur central (20; 320) et à faire passer des parties du gaz chaud de traitement par chacun desdits disperseurs périphériques (14, 16, 18; 314, 315, 316, 317, 318).

5. Procédé selon la revendication 4, dans lequel lesdits disperseurs (14, 16, 18, 20; 314, 315, 316, 317, 318, 320) comprennent de 3 à 7 disperseurs périphériques (14, 16, 18; 314, 315, 316, 317, 318) et un unique disperseur central (20; 320).

6. Procédé selon l'une quelconque des revendications 4 à 5, comprenant de plus l'étape qui consiste à faire passer une partie de gaz chaud de traitement par le disperseur central (320) de manière à obtenir un déplacement rotatif dans une direction (FCC) opposée à la direction (FC) du déplacement rotatif de chacune des parties respectives du gaz chaud de traitement dispersé par chacun desdits disperseurs périphériques (314, 315, 316, 317, 318).
